# EUROPEAN PATENT APPLICATION

(11) **EP 2 899 942 A1**
(43) Date of publication of application: **29.07.2015**
(21) Application number: 14305110.0
(22) Date of filing: 27.01.2014
(51) Int. Cl.: H04L 29/06

(54) **Provision of a network parameter to a client device**

(71) Applicant: Thomson Licensing, 92130 Issy-les-Moulineaux (FR)
(72) Inventor: Chandrashekar, Jaideep, 92443 Issy-les-Moulineaux (FR); Pefkianakis, Ioannis, 92443 Issy-les-Moulineaux (FR)

(57) **Abstract**

Method of provision of a network (4) parameter from a first client device, (6) storing said network parameter, to a second client device (12), comprising:
a) receiving a request to provide to the second client device (12) said network parameter ;
b) encoding said network parameter; and
c) providing the encoded network parameter to the second client device (12) using a communication means different from said network (4).

## Description

### FIELD OF THE INVENTION

The present invention generally relates to the field of networks, such as home wireless networks like Wifi.

More particularly, the invention concerns a method of provision of a network parameter to a client device. It also concerns a corresponding device and a computer program implementing the provision method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

One of the most common problems experienced by home Internet users that call their Internet Service Providers (ISPs) help desks relates to lost, misplaced or forgotten credentials permitting to access their Wifi wireless home network.

Typically, the Wifi configuration is carried out when the service is installed. During the configuration, users use the Wifi credentials provided by the ISP or created by the users themselves. Then, generally, users soon forget the Wifi credentials necessary for the configuration.

The solution proposed by the ISPs when they are solicited for this kind of problems is often to reset and reinitialize the configuration. However, such operations generally involve visiting the configuration pages of the wireless access point, typically a home gateway, or the ISP configuration pages. These steps require a certain domain knowledge from the user and are fundamentally unsuited for the typical end-user.

### SUMMARY OF THE INVENTION

The present invention proposes a solution for improving the situation.

Accordingly, the present invention provides a method of provision of a network parameter from a first client device, storing said network parameter, to a second client device, comprising:
a) receiving a request to provide to the second client device said network parameter;
b) encoding said network parameter ; and
c) providing the encoded network parameter to the second client device using a communication means different from said network.

Thus, the present invention provides a rapid and efficient means to provide the network parameter to the second client device.

Advantageously, the method further comprises a step of checking a physical proximity of the second client device to the first client device.

This checking is preferably performed by the first client device.

The physical proximity ensures that the information exchange between both client devices is secure.

According to a first embodiment, the physical proximity is checked by using at least one Received Signal Strength Indication, RSSI, measurement.

Using RSSI measurements is advantageous as an RSSI feedback is available in any commodity device on a per packet granularity. Besides, RSSI is a fairly accurate metric to capture proximity. Besides, RSSI measurements do not require any action from the user of the second client device. The second device itself sends some packets to the first client device and the first client device automatically measures RSSI.

According to a second embodiment, the physical proximity is checked by using sound sensing near the first client device in order to detect a presence of the second client device.

Sounding sensors are cheap and can be easily used for proximity detection.

Advantageously, the method further comprises preliminarily:
d) a registration of an identifier of the second client device with a server; and
e) sending said request from the server to the first client device.

The registration of an identifier of the second client device improves the security of the provision of the network parameter.

Advantageously, the method comprises an authentication of the second client device by the server before sending the request.

Thus, the security of the provision of the network parameter is further improved.

Advantageously, the method further comprises decoding, by the second client device, of the encoded network parameter.

Advantageously, the network is a wireless home network, for instance Wifi.

According to an embodiment, the network parameter is a parameter permitting a configuration of and/or an access to said network, for instance a credential.

Preferably, the first client device is an access point, such as a home gateway, and the second client device is a user mobile terminal, like a smartphone or a tablet.

Advantageously, the communication means comprises a display and the network parameter is encoded in the form of a Quick Response, QR, code or of a bar code.

Alternatively, the communication means comprises a Light Emitting Diode, LED, and the network parameter is encoded as a series of light impulses.

Alternatively, the communication means comprises an audio transmitter and the network parameter is encoded as a sound modulated signal.

The invention also provides a first client device able to provide a network parameter to a second client device, comprising:
a) a storage module for storing said network parameter;
b) a reception module for receiving a request to provide to the second client device said network parameter ;
c) an encoder for encoding said network parameter; and
d) a transmission module for providing the encoded network parameter to the second client device using a communication means different from said network.

Advantageously, the first client device is a home gateway.

The method according to the invention may be implemented in software on a programmable apparatus. It may be implemented solely in hardware or in software, or in a combination thereof. Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

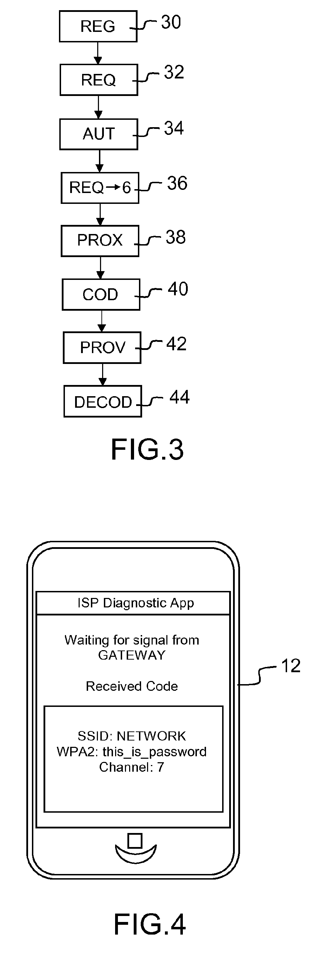

The invention thus provides a computer-readable program comprising computer-executable instructions to enable a computer to perform the method of the invention. The flowchart of figure 3 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a communication system implementing an embodiment of the present invention ;
- Figure 2 is a block diagram representing the structure of a first device, according to an embodiment of the present invention ;
- Figure 3 is a flowchart detailing the steps of the method of the invention, according to an embodiment; and
- Figure 4 shows an implementation of the invention in the second device, according to an embodiment.

### DETAILED DESCRIPTION OF PREFERRED EMBODIMENTS

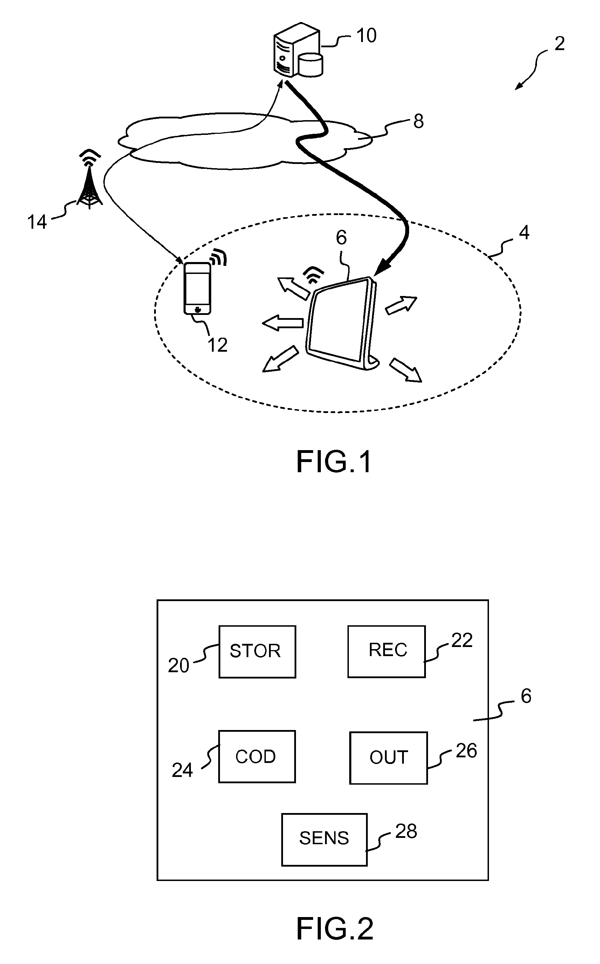

Referring to Figure 1, there is shown therein a schematic view of a communication system 2 implementing a method of at least one embodiment of the present invention.

The communication system 2 comprises a home wireless network 4, for instance a Wifi network. An access point 6, typically a home gateway, connects the home network 4 to the Internet network 8.

Thus, the access point 6 is connected, through the Internet network 8, to a NSP (Network Service Provider) server 10.

Furthermore, the communication system 2 comprises a user mobile terminal 12, for instance a smartphone, connected to the Internet network 8 and the NSP server 10 by a radio connection, for instance a 3G (3^{rd} Generation) link, via a base station 14.

The mobile terminal 12 is also able to access the home network 4 by using a suitable interface, for instance a Wifi interface.

In order to be connected to said home network 4 using said mobile terminal 12, the user must enter credentials, such as Wifi credentials consisting in a password for instance.

These credentials are generally created by the user at the first configuration of the home network. Then, very often these credentials are soon forgotten.

Embodiments of the invention enable such credentials to be pushed from the access point 6 to the user via the mobile terminal 12.

The block diagram of Figure 2 details the structure of the access point 6 according to a preferred embodiment of the invention.

The access point 6 comprises a storage module 20, such as a memory, in which are stored the network credentials.

The access point 6 also comprises a reception module 22 able to receive, from the NSP server 10 a request to provide to the mobile terminal 12 said network credentials.

The access point 6 further comprises an encoder 24 for encoding said network credentials, for instance as a QR code or a bar code or a series of light impulses or a sound modulated signal.

Furthermore, the access point 6 comprises a transmission module 26 for providing the encoded credentials to the mobile terminal 12 using a communication means. This transmission module may comprise a display, such as a LCD display or a LED or an audio transmitter.

The access point 6 also comprises a sensor 28 able to detect a physical proximity of the mobile terminal 12 to said access point 6.

Preferably, the sensor 28 is able to perform RSSI measurements.

Alternatively, the sensor 28 is a sound sensor.

The flowchart of Figure 3 details the steps of a preferred embodiment of the method of the invention of provision of the home network credentials from the access point 6 to the mobile terminal 12.

At a preliminary step 30, an identifier of the mobile terminal 12 is registered with the NSP server 10 and stored in the NSP subscribers database. This identifier is, for instance, the telephone number associated with the mobile terminal 12. This registration can be done at the time of the subscription of the user or may be updated when the user begins to use a new mobile terminal. Moreover, the user can register any number of distinct mobile terminals with the NSP server 10, for instance all the mobile terminals used by the user's family members.

Advantageously, for additional security, the MAC address of the mobile terminal 12 is also registered with the NSP server 10.

At a step 32, the user contacts the NSP and requests the network credentials. This situation may arise, for example, when the user needs to install and configure a new wireless device in the home and the network credentials have been forgotten.

The interaction between the user and the NSP can be done in several ways, such as:
- calling a human helpdesk operator of the NSP;
- calling a NSP helpdesk number and navigating a voice activated system;
- launching an application that can be downloaded and installed from the NSP website.

At step 34, the NSP server 10 authenticates the mobile terminal 12 by verifying that its identifier, for instance the telephone number or the MAC address, has been already registered in the NSP subscribers database and is correctly associated with the correct user account.

At step 36, the NSP server 10 sends a signal to the access point 6, requesting the latter to provide to the mobile terminal 12 the network credentials.

For instance, the NSP server 10 sends to the access point 6 a signal to enter a special "enable access" mode.

When the reception module 22 of the access point 6 receives the request from the NSP server 10, it verifies, at step 38, the physical proximity of the mobile terminal 12 to the access point 6. This physical proximity can be verified, by the sensor 28, in a number of ways, such as RSSI measurements or ambient sound sensing and audio signatures comparison.

According to a preferred embodiment, the access point 6 performs an authentication of the mobile terminal 12 when it detects the presence of said mobile terminal 12. If said access point 6 detects a malicious activity, or if a timer expires, it may force the mobile terminal 12 to be disconnected.

The use of a timer defining how long the mobile terminal is allowed to be connected to the access point is particularly advantageous for the case of a visitor, such as a user's friend, wishing to be connected for a limited time. When the timer expires, this means that the mobile terminal needs to be re-authenticated. Of course, in the case where the mobile terminal is a visitor's mobile terminal, steps 30 to 34 of authentication by the NSP are not performed.

At step 40, the access point 6 encodes the requested network credentials and broadcasts them, at step 42, to the mobile terminal 12.

According to a first example, this information is displayed as a QR code on a small LCD display.

In another example, this information is encoded as a series of light impulses transmitted by a single LED.

In yet another example, the network credential information is transmitted as a sound modulated signal.

At step 44, the mobile terminal 12 receives the information via a suitable sensor, for instance a camera for reading the QR code or an audio receiver for receiving the sound signal. Then, the mobile terminal 12 decodes the network credential information and displays it to the user in plain text in the mobile terminal 12.

FIG.4 shows an example of a display of the decoded network credentials on the mobile terminal 12.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed as a reference to the plural and vice versa.

A person skilled in the art will readily appreciate that various parameters disclosed in the description may be modified and that various embodiments disclosed and/or claimed may be combined without departing from the scope of the invention.

For instance, the proximity of the mobile terminal may also be checked using a camera. A button on the access point may also be used to indicate this proximity.

## Claims

1. Method of provision of a network (4) parameter from a first client device (6), storing said network parameter, to a second client device (12), comprising:
a) receiving (36) a request to provide to the second client device (12) said network parameter ;
b) encoding (40) said network parameter; and
c) providing (42) the encoded network parameter to the second client device (12) using a communication means different from said network (4).

2. Method of claim 1, further comprising checking (38) a physical proximity of the second client device (12) to the first client device (6).

3. Method of claim 2, wherein the physical proximity is checked by using at least one Received Signal Strength Indication, RSSI, measurement.

4. Method of claim 2, wherein the physical proximity is checked by using sound sensing near the first client device (6) in order to detect a presence of the second client device (12).

5. Method of any one of claims 1 to 4, further comprising preliminarily:
d) a registration (30) of an identifier of the second client device (12) with a server (10); and
e) sending (36) said request from the server (10) to the first client device (6).

6. Method of claim 5, further comprising an authentication (34) of the second client device (12) by the server (10) before sending the request.

7. Method of any one of claims 1 to 6, further comprising decoding (44), by the second client device (12), of the encoded network parameter.

8. Method of any one of claims 1 to 7, wherein the network (4) is a wireless home network, for instance Wifi.

9. Method of any one of claims 1 to 8, wherein the network parameter is a parameter permitting a configuration of and/or an access to said network, for instance a credential.

10. Method of any one of claims 1 to 9, wherein the first client device (6) is an access point, such as a home gateway, and the second client device (12) is a user mobile terminal, such as a smartphone or a tablet.

11. Method of any one of claims 1 to 10, wherein the communication means comprises a display and the network parameter is encoded in the form of a Quick Response, QR, code or of a bar code.

12. Method of any one of claims 1 to 10, wherein the communication means comprises a Light Emitting Diode, LED, and the network parameter is encoded as a series of light impulses.

13. Method of any one of claims 1 to 10, wherein the communication means comprises an audio transmitter and the network parameter is encoded as a sound modulated signal.

14. First client device (6) for providing a network parameter to a second client device (12), comprising:
a) a storage module (20) for storing said network parameter;
b) a reception module (22) for receiving a request to provide to the second client device (12) said network parameter;
c) an encoder (24) for encoding said network parameter; and
d) a transmission module (26) for providing the encoded network parameter to the second client device using a communication means different from said network.

15. Computer-readable program comprising computer-executable instructions to enable a computer to perform the method of any of claims 1 to 13.
